# EUROPÄISCHE PATENTSCHRIFT

(11) **EP 1 617 995 B1**
(45) Veröffentlichungstag und Bekanntmachung des Hinweises auf die Patenterteilung: **31.01.2007**
(21) Anmeldenummer: 04725680.5
(22) Anmeldetag: 05.04.2004
(51) Int. Cl.: B32B 15/08, B32B 27/30, B65D 75/36, B32B 27/32, B32B 27/36

(54) **DECKFOLIE FÜR BLISTERVERPACKUNGEN**
COVERING FOIL FOR BLISTER PACKS
OPERCULE DESTINE A UN EMBALLAGE-COQUE

(30) Priorität: 16.04.2003 EP 03405269
(43) Veröffentlichungstag der Anmeldung: 25.01.2006
(73) Patentinhaber: Alcan Technology & Management Ltd., 8212 Neuhausen am Rheinfall (CH)
(72) Erfinder: PASBRIG, Erwin, 78224 Singen (DE)
(86) Internationale Anmeldenummer: PCT/EP2004/003583
(87) Internationale Veröffentlichungsnummer: WO 2004/091905

(56) Entgegenhaltungen:
- EP-A- 0 389 207
- EP-A- 0 570 188
- DE-A- 2 456 228
- FR-A- 2 415 247
- GB-A- 1 247 935
- GB-A- 1 523 244
- US-A- 3 332 549
- US-A- 3 976 195
- US-A- 4 567 986
- US-A- 4 785 937
- US-A- 5 560 490
- US-A- 5 927 500

## Beschreibung

Die Erfindung betrifft eine Deckfolie für Blisterverpackungen mit thermo- oder kaltgeformten Blisterbodenteilen zur kindersicheren und seniorenfreundlichen Verpackung von pharmazeutischen Produkten.

Um die Anforderungen von Blisterpackungen an Kindersicherheit und Seniorenfreundlichkeit zu erfüllen, werden Deckfolien in der Form von Durchdrück-, Peel- und Peel-Push-Folien in Kombination mit entsprechenden Bodenfolien und Blisterdesign verwendet. Aufgrund unterschiedlicher gesetzgeberischer Vorschriften sind die in einem Land freigegebenen Blisterverpackungen in einem anderen Land nicht ohne weiteres ebenfalls zugelassen.

In den USA müssen alle Blisterverpackungen mit einem neuen Produkt, welches Kindersicherheit und Seniorenfreundlichkeit erfordert, in einem Praxistest geprüft werden. Ein entscheidendes Kriterium ist hier, dass die Kinder im Prüfalter aufgefordert werden, die Blisterpackung in den Mund zu nehmen und darauf zu beissen. Aus diesem Grund werden in den USA Verbundmaterialien mit der Schichtfolge Papier/PET/Aluminium/Heisssiegelschicht als Deckfolien eingesetzt. Da es kaum mehr möglich ist, diese Deckfolie zu durchbeissen, kann das Produkt im Blister aber auch nicht durch Herausdrücken aus der Packung entnommen werden. Die Deckfolie ist daher entweder als Peel- oder Peel-Push-Folie konzipiert oder die Blisterpackung ist vom Bodenteil her über Öffnungshilfen aufreissbar. Bedingt durch die beissfeste Ausgestaltung der Deckfolie weisen diese Blisterverpackungen notwendigerweise Kreuzperforationen und versteckte Öffnungshilfen auf. Dies führt zu einer wesentlichen Vergrösserung der Blister im Vergleich zu einer Durchdrückpackung mit einer üblichen Durchdrückfolie. Die Zunahme der Blisterdimensionen von mindestens 3 mm in der Breite und mindestens 12 mm in der Länge führt zu einer geringeren Flächenausbeute und damit zu einer Verkleinerung der Anzahl Blister pro Formtakt bei der Herstellung der Blisterpackungen.

Im Gegensatz zu den USA gibt es in Europa noch keine einheitlichen Vorschriften für kindersichere und seniorenfreundliche Blisterverpackungen. In Deutschland sind die nachstehenden Kombinationen von Deckfolien und Bodenteilen getestet und veröffentlicht worden:

| **Deckfolie** | **Bodenmaterial** |
|---|---|
| 50 g/m² Papier / 9 µm Al-Folie / 7 g/m² HSL (Heisssiegellack) | PVC, ACLAR® (PCTFE) |
| Purelay-lid (PE), 70-100 µm (Kreuzperforation) | PP |
| 23 µm PET-Folie / Peelkleber / 20 µm Al-Folie / 5,5 g/m² HSL | PP, Formpack®-PP (Al/PP) |
| 40 g/m² Papier / 7 µm Al-Folie / 3,5 g/m² HSL | PP |
| Lack / 30µm Al-Folie, hart, geprägt / 9 g/m² HSL | PVC |
| 50 g/m² Papier / 9 µm Al-Folie / 7 g/m² HSL | PVC |
| 35 g/m² Papier / 9 µm Al-Folie / 7 g/m² HSL | PVC |
| Lack / 25 µm Al-Folie / 9 g/m² HSL (Kreuzperforation) | PVC |

Die Prüfung der Durchdrückeigenschaften erfolgt mechanisch. Hierbei wird mit einer definierten Geschwindigkeit ein halbrunder Stempel auf die in eine Halterung eingespannte Folieninnenseite gedrückt. Die zum Durchdrücken erforderliche Kraft wird in Newton angegeben.

Die nachstehenden, in vielen europäischen Ländern eingesetzten Ausführungen von Deckfolien weisen Durchdrückkräfte zwischen 38 und 56 N auf (Standardabweichung ca. 8):

| **Deckfolie** | **Durchdrückkraft [N]** |
|---|---|
| 50 g/m² Papier / 9 µm Al-Folie / 7 g/m² HSL | 48 |
| 40 g/m² Papier / 7 µm Al-Folie / 3,5 g/m² HSL | 41 |
| Schutzlack / 30µm Al-Folie, hart, geprägt / 9 g/m² HSL | 56 |
| 35g/m² Papier / 9µm Al-Folie / 7 g/m² HSL | 38 |
| Schutzlack / 25µm Al-Folie / 9 g/m² HSL (Kreuzperforation) | 38 |

Im Gegensatz zu den in den USA geltenden Prüfvorschriften müssen Verpackungen in Europa nur einmal nach obigem Verfahren geprüft werden und sind dann für alle Produkte generell als kindersicher zugelassen. Im Rahmen eines neuen Gesetzesentwurfs sind jedoch Bestrebungen im Gange, den in den USA obligatorischen Durchbeisstest auch in Europa als ein entscheidendes Kriterium für die Zulassung als kindersichere Verpackung in die Prüfung aufzunehmen. Dies würde für pharmazeutische Unternehmen bedeuten, dass neue Primärpackmittel verwendet werden müssen. Damit sind aber sehr kostenintensive Stabilitätsuntersuchungen verbunden, die Abpackanlagen müssen umgerüstet werden und die Produktivität bei der Blisterherstellung sinkt.

Aus US-A-5 927 500 und US-A-5 560 490 ist die Verwendung von Polychlortrifluorethylen (PCTFE) als Material einer Umverpackung für einen Blisterstreifen bzw. für ein Blisterbodenteil bekannt.

Der Erfindung liegt die Aufgabe zugrunde, eine zur Siegelung gegen alle gängigen Bodenmaterialien geeignete Deckfolie zu schaffen, die ein kindersicheres und seniorenfreundliches Öffnen von Blisterpackungen, einschliesslich Tropenblister, durch Durchdrücken ermöglicht und die auf bestehenden Abpackanlagen ohne Umrüsten eingesetzt werden kann.

Zur erfindungsgemässen Lösung der Aufgabe führen eine Deckfolie und eine Blisterverpackung mit den Merkmalen der unabhängigen Ansprüche 1 und 10.

Vorteilhafte Ausgestaltungen der Deckfolie und der Blisterverpackung sind Gegenstand von abhängigen Ansprüchen.

Das Material der zur Siegelung gegen das Blisterbodenteil vorgesehenen Kunststofffolie wird entsprechend dem Material der zur Siegelung vorgesehenen Seite des Blisterbodenteils gewählt. Damit ist die Kompatibilität der chemischen Struktur der mit dem Füllgut in Kontakt kommenden Seite der erfindungsgemässen Deckfolie mit der chemischen Struktur der mit dem Füllgut in Kontakt kommenden Seite einer bisher verwendeten und zugelassenen Bodenfolie sichergestellt, so dass die Durchführung neuer Stabilitätsuntersuchungen nicht zwingend erforderlich ist.

Die Fertigung der gewünschten Blisterverpackungen mit der erfindungsgemässen Deckfolie kann auf bestehenden Anlagen erfolgen.

Die Aluminiumfolie weist bevorzugt eine Dicke von 7 bis 30 µm auf.

Bevorzugt besteht die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe, wobei das bevorzugte Auftragsgewicht der Schutzlackschicht 0,5 bis 5 g/m² beträgt.

Das Papier auf der ersten Seite der Aluminiumfolie kann Pergaminpapier, Pergaminersatzpapier, gestrichenes oder satiniertes Papier mit einem bevorzugten Flächengewicht von 19 bis 50 g/m² sein.

Bevorzugt ist das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert.

Die Kunststofffolie auf der zweiten Seite der Aluminiumfolie kann mit einem wässrigen, einem lösungsmittelbasierten oder einem lösungsmittelfreien Kaschiermittel oder durch Extrusionskaschieren gegen die Aluminiumfolie kaschiert sein.

Bei einer Blisterverpackung mit einem Blisterbodenteil und einer gegen das Blisterbodenteil gesiegelten erfindungsgemässen Deckfolie besteht das Blisterbodenteil wenigstens auf der gegen die Deckfolie gesiegelten Seite aus einem Material, dessen chemische Struktur mit derjenigen der gegen das Blisterbodenteil gesiegelten Kunststofffolie kompatibel ist. Bevorzugt besteht das Blisterbodenteil wenigstens auf der gegen die Deckfolie gesiegelten Seite aus dem gleichen Material wie die gegen das Blisterbodenteil gesiegelte Kunststofffolie.

Beispiele von zur Herstellung von Blisterbodenteilen verwendeten Materialien sind Folien aus PVC, PVDC, PP, PET, PE und Verbundfolien wie PVC/ACLAR® (PCTFE), PVC/PVDC und COC oder FORMPACK® (Al-Al Blister).

Es sei hier noch erwähnt, dass sowohl die Deckfolie als auch die Bodenfolie bedruckt sein können.

In der nachstehenden Tabelle sind Beispiele von Deckfolien mit zugehöriger Durchdrückkraft zusammengestellt. Beispiel 8 ist eine erfindungsgemässe Deckfolie, die übrigen Beispiele sind nicht erfindungsgemässe Deckfolien. Mit "Beschichtung aussen" ist die nach aussen, mit "Beschichtung innen" die zur Siegelung gegen das Blisterbodenteil gerichtete Beschichtung der Aluminiumfolie bezeichnet, jeweils unter Angabe des Flächengewichts bei Lack- und bei Papierbeschichtung bzw. der Foliendicke bei Folienbeschichtung und der Verbindungsart zwischen der Beschichtung und der Aluminiumfolie.

| **Beispiel** | **Beschichtung aussen** | **Aluminium-folie** | **Beschichtung innen** | **Durchdrückkraft [N]** |
|---|---|---|---|---|
| 1 | Schutzlack, 1,0 g/m² lackiert | 20 µm, hart | PVC-Folie, 15 µm lackkaschiert | 44 |
| 2 | Schutzlack, 1,0 g/m² lackiert | 25 µm, weich | PVC-Folie, 25 µm lackkaschiert | 54 |
| 3 | Papier, 21 g/ m² kaschiert | 20 µm, hart 20 µm, hart | PVC-Folie, 15 µm lackkaschiert | 59 |
| 4 | Schutzlack, 1,0 g/m² lackiert | 20 µm, hart | PVC-Folie, 25 µm lackkaschiert | 61 |
| 5 | Schutzlack, 1,0 g/m² lackiert | 20 µm, hart | PVDC-Folie, 25 µm lackkaschiert | 77 |
| 6 | Schutzlack, 1,0 g/m² lackiert | 20 µm, hart | PVC-Folie, 30 µm lackkaschiert | 105 |
| 7 | Schutzlack, 1,0 g/m² lackiert | 20 µm, hart | PVC-Folie, 40 µm lackkaschiert | 48 |
| 8 | Schutzlack, 1,0 g/m² Lackiert | 20 µm, hart | ACLAR®-Folie, 15 µm lackkaschiert | 76 |
| 9 | PET-Folie, 7 µm kaschiert | 9 µm, weich | PET-Folie, 7 µm kaschiert | 94 |
| 10 | Schutzlack, 1,0 g/m² lackiert | 20 µm, hart | monoax. PP-Folie, 30 µm lackkaschiert | 89 |
| 11 | Schutzlack, 1 ,0 g/m² lackiert | 20 µm, hart | monoax. PP-Folie, 20 µm extrusionskaschiert (7g/m²) | 90 |
| 12 | Schutzlack, 1,0 g/m² lackiert | 25 µm, hart | monoax. PVC-Folie, 35 µm extrusionskaschiert (7g/m²) | 48 |
| 13 | Pergaminpapier, 35 g/m² kaschiert | 9 µm, weich | PVC-Folie, 15 µm lackkaschiert | 20 |
| 14 | Schutzlack, 1,0 g/m² lackiert | 20 µm, hart | COC-Folie, 20 µm lackkaschiert | |

## Patentansprüche

1. Deckfolie für thermo- und kaltgeformte Blister zur kindersicheren und seniorenfreundlichen Verpackung von Medikamenten und medizinischen Produkten, enthaltend eine 5 bis 30 µm dicke Aluminiumfolie, die auf einer ersten Seite a) unbeschichtet ist oder b) mit einem Schutzlack mit einem Auftragsgewicht von 0,1 bis 10 g/m² lackiert ist oder c) mit Papier mit einem Flächengewicht von 17 bis 60 g/m² kaschiert ist oder d) mit einer 5 bis 15 µm dicken Polyesterfolie kaschiert ist und auf der zweiten, zur Siegelung gegen ein Blisterbodenteil vorgesehenen Seite mit einer nicht, monoaxial oder biaxial gereckten Kunststofffolie auf der Basis von Polychlortrifluorethylen (PCTFE) mit einer Foliendicke von 8 bis 76 µm kaschiert ist.

2. Deckfolie nach Anspruch 1, **dadurch gekennzeichnet, dass** die Aluminiumfolie im Zustand weich oder hart ist oder eine definierte Härte aufweist.

3. Deckfolie nach Anspruch 1 oder 2, **dadurch gekennzeichnet, dass** die Aluminiumfolie 7 bis 30 µm dick ist.

4. Deckfolie nach einem der Ansprüche 1 bis 3, **dadurch gekennzeichnet, dass** die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe besteht.

5. Deckfolie nach Anspruch 4, **dadurch gekennzeichnet, dass** das Auftragsgewicht der Schutzlackschicht 0,5 bis 5 g/m² beträgt.

6. Deckfolie nach einem der Ansprüche 1 bis 3 **dadurch gekennzeichnet, dass** das Papier auf der ersten Seite der Aluminiumfolie Pergaminpapier, Pergaminersatzpapier, gestrichenes oder satiniertes Papier ist.

7. Deckfolie nach Anspruch 6, **dadurch gekennzeichnet, dass** das Papier ein Flächengewicht von 19 bis 50 g/m² aufweist.

8. Deckfolie nach einem der Ansprüche 1 bis 3, **dadurch gekennzeichnet, dass** das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert ist.

9. Deckfolie nach einem der Ansprüche 1 bis 8, **dadurch gekennzeichnet, dass** die Kunststofffolie auf der zweiten Seite der Aluminiumfolie mit einem wässrigen, einem lösungsmittelbasierten oder einem lösungsmittelfreien Kaschiermittel oder durch Extrusionskaschieren gegen die Aluminiumfolie kaschiert ist.

10. Blisterverpackung mit einem Blisterbodenteil und einer gegen das Blisterbodenteil gesiegelten Deckfolie, wobei die Deckfolie eine 5 bis 30 µm dicke Aluminiumfolie ist, die auf einer ersten Seite a) unbeschichtet ist oder b) mit einem Schutzlack mit einem Auftragsgewicht von 0,1 bis 10 g/m² lackiert ist oder c) mit Papier mit einem Flächengewicht von 17 bis 60 g/m² kaschiert ist oder d) mit einer 5 bis 15 µm dicken Polyesterfolie kaschiert ist und auf der zweiten, gegen das Blisterbodenteil gesiegelten Seite mit einer nicht, monoaxial oder biaxial gereckten Kunststofffolie auf der Basis von Polychlortrifluorethylen (PCTFE) mit einer Foliendicke von 8 bis 76 µm kaschiert ist, und dass das Blisterbodenteil wenigstens auf der gegen die Deckfolie gesiegelten Seite aus einem Material besteht, dessen chemische Struktur mit derjenigen der gegen das Blisterbodenteil gesiegelten Kunststofffolie kompatibel ist.

11. Blisterverpackung nach Anspruch 10, **dadurch gekennzeichnet, dass** das Blisterbodenteil wenigstens auf der gegen die Deckfolie gesiegelten Seite aus dem gleichen Material besteht wie die gegen das Blisterbodenteil gesiegelte Kunststofffolie.

12. Blisterverpackung nach Anspruch 10 oder 11, **dadurch gekennzeichnet, dass** die Aluminiumfolie im Zustand weich oder hart ist oder eine definierte Härte aufweist

13. Blisterverpackung nach einem der Ansprüche 10 bis 12, **dadurch gekennzeichnet, dass** die Aluminiumfolie 7 bis 30 µm dick ist.

14. Blisterverpacküng nach einem der Ansprüche 10 bis 13, **dadurch gekennzeichnet, dass** die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe besteht.

15. Blisterverpackung nach Anspruch 14, **dadurch gekennzeichnet, dass** das Auftragsgewicht der Schutzlackschicht 0,5 bis 5 g/m² beträgt.

16. Blisterverpackung nach einem der Ansprüche 10 bis 13, **dadurch gekennzeichnet, dass** das Papier auf der ersten Seite der Aluminiumfolie Pergaminpapier, Pergaminersatzpapier, gestrichenes oder satiniertes Papier ist.

17. Blisterverpackung nach Anspruch 16, **dadurch gekennzeichnet, dass** das Papier ein Flächengewicht von 19 bis 50 g/m² aufweist.

18. Blisterverpackung nach einem der Ansprüche 10 bis 13, **dadurch gekennzeichnet, dass** das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert ist.

19. Blisterverpackung nach einem der Ansprüche 10 bis 18, **dadurch gekennzeichnet, dass** die Kunststofffolie auf der zweiten Seite der Aluminiumfolie mit einem wässrigen, einem lösungsmittelbasierten oder einem lösungsmittelfreien Kaschiermittel oder durch Extrusionskaschieren gegen die Aluminiumfolie kaschiert ist.

## Claims

1. Covering foil for thermoformed and cold-formed blisters for the child-resistant and senior-friendly packaging of medicines and medicinal products, comprising a 5 to 30 µm thick aluminium foil which on a first side a) is uncoated or b) is coated with a protective lacquer having a coating weight of 0.1 to 10 g/m² or c) is laminated with paper having a basis weight of 17 to 60 g/m² or d) is laminated with a 5 to 15 µm thick polyester film and on the second side intended for sealing to a blister bottom part is laminated with a non-oriented, monoaxially oriented or biaxially oriented plastic film on the basis of polychlorotrifluoroethylene (PCTFE) having a film thickness of 8 to 76 urn.

2. Covering foil according to claim 1, **characterised in that** the aluminium foil is in the soft or hard state or has a defined hardness.

3. Covering foil according to claim 1 or claim 2, **characterised in that** the aluminium foil is 7 to 30 µm thick.

4. Covering foil according to one of claims 1 to 3, **characterised in that** the protective lacquer layer on the first side of the aluminium foil consists of a lacquer based on aqueous or organic solvents on the basis of nitrocellulose, epoxy resin, urea resin, melamine resin, polyester, polyurethane or mixtures of the said lacquer raw materials.

5. Covering foil according to claim 4, **characterised in that** the coating weight of the protective lacquer layer is 0.5 to 5 g/m².

6. Covering foil according to one of claims 1 to 3, **characterised in that** the paper on the first side of the aluminium foil is glassine paper, parchment paper, coated paper or glazed paper.

7. Covering foil according to claim 6, **characterised in that** the paper has a basis weight of 19 to 50 g/m².

8. Covering foil according to one of claims 1 to 3, **characterised in that** the paper or the polyester film on the first side of the aluminium foil is laminated to the aluminium foil by means of an aqueous, solvent-based or solvent-free laminating agent.

9. Covering foil according to one of claims 1 to 8, **characterised in that** the plastic film on the second side of the aluminium foil is laminated to the aluminium foil by means of an aqueous, solvent-based or solvent-free laminating agent or by extrusion lamination.

10. Blister pack comprising a blister bottom part and a covering foil sealed to the blister bottom part, the covering foil being a 5 to 30 µm thick aluminium foil which on a first side a) is uncoated or b) is coated with a protective lacquer having a coating weight of 0.1 to 10 g/m² or c) is laminated with paper having a basis weight of 17 to 60 g/m² or d) is laminated with a 5 to 15 µm thick polyester film and on the second side sealed to the blister bottom part is laminated with a non-oriented, monoaxially oriented or biaxially oriented plastic film on the basis of polychlorotrifluoroethylene (PCTFE) having a film thickness of 8 to 76 µm, and that the blister bottom part consists at least on the side sealed to the covering foil of a material the chemical structure of which is compatible with that of the plastic film sealed to the blister bottom part.

11. Blister pack according to claim 10, **characterised in that** the blister bottom part consists at least on the side sealed to the covering foil of the same material as the plastic film sealed to the blister bottom part.

12. Blister pack according to claim 10 or claim 11, **characterised in that** the aluminium foil is in the soft or hard state or has a defined hardness.

13. Blister pack according to one of claims 10 to 12, **characterised in that** the aluminium foil is 7 to 30 µm thick.

14. Blister pack according to one of claims 10 to 13, **characterised in that** the protective lacquer layer on the first side of the aluminium foil consists of a lacquer based on aqueous or organic solvents on the basis of nitrocellulose, epoxy resin, urea resin, melamine resin, polyester, polyurethane or mixtures of the said lacquer raw materials.

15. Blister pack according to claim 14, **characterised in that** the coating weight of the protective lacquer layer is 0.5 to 5 g/m².

16. Blister pack according to one of claims 10 to 13, **characterised in that** the paper on the first side of the aluminium foil is glassine paper, parchment paper, coated paper or glazed paper.

17. Blister pack according to claim 16, **characterised in that** the paper has a basis weight of 19 to 50 g/m².

18. Blister pack according to one of claims 10 to 13, **characterised in that** the paper or the polyester film on the first side of the aluminium foil is laminated to the aluminium foil by means of an aqueous, solvent-based or solvent-free laminating agent.

19. Blister pack according to one of claims 10 to 18, **characterised in that** the plastic film on the second side of the aluminium foil is laminated to the aluminium foil by means of an aqueous, solvent-based or solvent-free laminating agent or by extrusion lamination.

## Revendications

1. Feuille de recouvrement pour emballages-coques thermoformés et formés à froid pour l'emballage conforme aux normes de sécurité pour enfants et convivial pour les seniors de médicaments et de produits médicaux, comprenant une feuille d'aluminium de 5 à 30 *µ*m d'épaisseur dont la première face est a) non recouverte ou b) est vernie avec un vernis de protection d'un poids d'application de 0,1 à 10 g/m² ou c) est contrecollée de papier d'un grammage de 17 à 60 g/m² ou d) est contrecollée d'une feuille de polyester de 5 à 15 µm d'épaisseur et sur la deuxième face, prévue pour le scellement sur un fond d'emballage-coque, est recouverte d'une feuille en matière plastique non étirée, étirée selon un axe ou étirée selon deux axes à base de polychlorotrifluoroéthylène (PCTFE) d'une épaisseur de film de 8 à 76 µm.

2. Feuille de recouvrement suivant la revendication 1, **caractérisée en ce que** la feuille d'aluminium est à l'état dur ou tendre ou présente une dureté définie.

3. Feuille de recouvrement suivant la revendication 1 ou 2, **caractérisée en ce que** la feuille d'aluminium a une épaisseur de 7 à 30 *µ*m.

4. Feuille de recouvrement suivant l'une des revendications 1 à 3, **caractérisée en ce que** la couche de vernis de protection sur la première face de la feuille d'aluminium est constituée d'un vernis à base d'eau ou de solvant organique à base de nitrocellulose, de résine époxy, de résine uréique, de résine de mélamine, de polyester, de polyuréthanne ou de mélanges des matières premières des vernis cités.

5. Feuille de recouvrement suivant la revendication 4, **caractérisée en ce que** le poids d'application de la couche de vernis de protection est de 0,5 à 5 g/m².

6. Feuille de recouvrement suivant l'une des revendications 1 à 3, **caractérisée en ce que** le papier sur la première face de la feuille d'aluminium est du papier parchemin, du papier parchemin imité, du papier couché ou du papier satiné.

7. Feuille de recouvrement suivant la revendication 6, **caractérisée en ce que** le papier présente un grammage de 19 à 50 g/m².

8. Feuille de recouvrement suivant l'une des revendications 1 à 3, **caractérisée en ce que** le papier ou la feuille de polyester sur la première face de la feuille d'aluminium est contrecollé sur la feuille d'aluminium à l'aide d'un agent de contrecollage à base d'eau, de solvant ou sans solvant.

9. Feuille de recouvrement suivant l'une des revendications 1 à 8, **caractérisée en ce que** la feuille en matière plastique sur la deuxième face de la feuille d'aluminium est contrecollée sur la feuille d'aluminium à l'aide d'un agent de contrecollage à base d'eau, de solvant ou sans solvant ou par extrusion.

10. Emballage-coque avec un fond d'emballage-coque et une feuille de recouvrement scellée sur le fond d'emballage-coque, la feuille de recouvrement étant une feuille d'aluminium de 5 à 30 *µ*m d'épaisseur dont la première face est a) non recouverte ou b) est vernie avec un vernis de protection d'un poids d'application de 0,1 à 10 g/m² ou c) est contrecollée de papier d'un grammage de 17 à 60 g/m² ou d) est contrecollée d'une feuille de polyester de 5 à 15 *µ*m d'épaisseur et sur la deuxième face, scellée sur le fond d'emballage-coque, est recouverte d'une feuille en matière plastique non étirée, étirée selon un axe ou étirée selon deux axes à base de polychlorotrifluoroéthylène (PCTFE) d'une épaisseur de film de 8 à 76 µm, et en ce que le fond d'emballage-coque est constitué au moins sur la face scellée sur la feuille de recouvrement d'un matériau dont structure chimique est compatible avec celle de la feuille en matière plastique scellée sur le fond d'emballage-coque.

11. Emballage-coque suivant la revendication 10, **caractérisé en ce que** le fond d'emballage-coque est constitué au moins sur la face scellée sur la feuille de recouvrement du même matériau que la feuille en matière plastique scellée sur le fond d'emballage-coque.

12. Emballage-coque suivant la revendication 10 ou 11, **caractérisé en ce que** la feuille d'aluminium est à l'état tendre ou dur ou présente une dureté définie.

13. Emballage-coque suivant l'une des revendications 10 à 12, **caractérisé en ce que** la feuille d'aluminium a une épaisseur de 7 à 30 *µ*m.

14. Emballage-coque suivant l'une des revendications 10 à 13, **caractérisé en ce que** la couche de vernis de protection sur la première face de la feuille d'aluminium est constituée d'un vernis à base d'eau ou de solvant organique à base de nitrocellulose, de résine époxy, de résine uréique, de résine de mélamine, de polyester, de polyuréthanne ou de mélanges des matières premières des vernis cités.

15. Emballage-coque suivant la revendication 14, **caractérisé en ce que** le poids d'application de la couche de vernis de protection est de 0,5 à 5 g/m².

16. Emballage-coque suivant l'une des revendications 10 à 13, **caractérisé en ce que** le papier sur la première face de la feuille d'aluminium est du papier parchemin, du papier parchemin imité, du papier couché ou du papier satiné.

17. Emballage-coque suivant la revendication 16, **caractérisé en ce que** le papier présente un grammage de 19 à 50 g/m².

18. Emballage-coque suivant l'une des revendications 10 à 13, **caractérisé en ce que** le papier ou la feuille de polyester sur la première face de la feuille d'aluminium est contrecollé sur la feuille d'aluminium à l'aide d'un agent de contrecollage à base d'eau, de solvant ou sans solvant.

19. Emballage-coque suivant l'une des revendications 10 à 18, **caractérisé en ce que** la feuille en matière plastique sur la deuxième face de la feuille d'aluminium est contrecollée sur la feuille d'aluminium à l'aide d'un agent de contrecollage à base d'eau, de solvant ou sans solvant ou par extrusion.
